# FASCICULE DE BREVET EUROPEEN

(11) **EP 1 324 466 B1**
(45) Date de publication et mention de la délivrance du brevet: **15.06.2011**
(21) Numéro de dépôt: 02028113.5
(22) Date de dépôt: 18.12.2002
(51) Int. Cl.: H02K 7/102, F16D 55/36

(54) **Dispositif de frein a disques et de transmission de couple**
Drehmomentübertragungs- und Scheibenbremsenvorrichtung
Disc brake and torque transmission device

(30) Priorité: 28.12.2001 FR 0117006
(43) Date de publication de la demande: 02.07.2003
(73) Titulaire: Somfy SAS, 74300 Cluses (FR)
(72) Inventeur: Lagarde, Eric, 74700 Sallanches (FR); Chatellard, David, 74170 Saint Gervais les Bains (FR); Volle, Frédéric, 74100 Ville-la-Grand (FR)
(74) Mandataire: Bugnion Genève

(56) Documents cités:
- DE-C- 834 714
- FR-A- 2 720 806
- FR-A- 2 745 126
- US-A- 3 068 975

## Description

La présente invention concerne un dispositif de frein défini par les caractéristiques du préambule de la revendication 1.

Un dispositif de frein de ce type est décrit dans le document FR-A-2 720 806.

L'invention concerne plus particulièrement un frein pour moteur tubulaire d'entraînement de tube d'enroulement de volet roulant ou similaire.

Du modèle d'utilité IT-BO-92 U 000009, on connaît un dispositif de frein disposé dans le tube du moteur d'entraînement du tube d'enroulement d'un volet roulant ou similaire entre le moteur et un réducteur. Le frein est en position "freiné", bloquant la rotation du tube d'enroulement, lorsque l'arbre moteur est à l'arrêt et passe en position "libre", libérant la rotation du tube d'enroulement, lorsque l'arbre moteur est entraîné. Ce dispositif de frein a aussi pour fonction de transmettre un couple mécanique du moteur au réducteur. Le dispositif de frein comprend deux disques de frein disposés en vis-à-vis, dont l'un est monté en liaison pivot sur l'arbre du moteur et terminé par un pignon attaquant le réducteur et présente une découpe dans laquelle une goupille logée dans l'arbre moteur peut se déplacer, et dont l'autre est fixé au tube du moteur. Le dispositif comprend aussi un ressort de compression entre un palier portant l'arbre moteur et le disque de frein monté en liaison pivot sur l'arbre moteur. Lorsque le moteur n'est pas alimenté, l'action du ressort sur le disque monté en liaison pivot sur l'arbre, plaque les disques l'un contre l'autre. De cette manière, les disques étant immobilisés l'un contre l'autre, le pignon d'entrée du réducteur est immobilisé, et le volet roulant est par conséquent bloqué. Lorsque le moteur est alimenté, l'arbre moteur tourne par rapport aux disques de frein initialement immobilisés. Ce mouvement de rotation par rapport au disque de frein monté en liaison pivot sur l'arbre moteur va induire par l'action de la goupille sur la découpe un mouvement de translation du disque contre l'action du ressort provoquant le décollement des disques. Le volet roulant est par conséquent libéré. Le mouvement de rotation de l'arbre par rapport au disque se poursuit jusqu'à ce que l'effort axial exercé par le disque en réaction au poids du volet équilibre l'effort du ressort ou, à défaut, jusqu'à ce que la goupille arrive en obstacle à l'extrémité de la découpe, et on obtient alors une transmission du couple mécanique du moteur au réducteur et, par conséquent, un mouvement d'ouverture ou de fermeture du volet roulant.

Un tel dispositif de frein nécessite, en position "freiné", un jeu entre la goupille et la découpe pratiquée dans le disque, garantissant le contact entre les disques de frein et par conséquent le freinage. Ce jeu de fonctionnement doit être maîtrisé précisément car il détermine, de plus, l'amplitude du mouvement de rotation de l'arbre par rapport au disque, nécessaire au décollement du frein. Or la chaîne de cotes de ce jeu de fonctionnement passe par la goupille, l'arbre moteur, le palier, le tube du moteur et le disque. Ces pièces étant relativement nombreuses et certaines d'entre elles présentant des cotes relativement importantes, il faut une fabrication et un assemblage très soigné pour obtenir un intervalle de tolérance du jeu de fonctionnement convenable. Ces opérations ont donc un coût élevé. De plus, un tel dispositif du fait de la localisation du ressort, induit des efforts axiaux dans le palier ce qui contraint à l'emploi d'un roulement à billes portant l'arbre du moteur.

Le but de l'invention est de réaliser un dispositif de frein palliant ces inconvénients. En particulier, l'invention se propose de réaliser un dispositif de frein dans lequel, d'une part, la chaîne de cotes associée au jeu de fonctionnement entre la goupille et la découpe présente une longueur totale plus courte que celle présentée dans le document IT-BO-92 U 000009 et, d'autre part, l'effort qu'exerce le ressort sur le disque n'est pas repris dans le palier supportant l'arbre moteur.

Le dispositif de frein selon l'invention est caractérisé par la partie caractérisante de la revendication 1.

Des caractéristiques supplémentaires et les différents modes de réalisation du dispositif de frein selon l'invention sont définis par les revendications dépendantes.

Le dessin annexé présente, à titre d'exemples, deux modes d'exécution du dispositif selon l'invention.

La figure 1 est une vue en coupe axiale du dispositif de frein selon un premier mode d'exécution, en position "freiné".

La figure 2 représente le frein de la figure 1 en position "libre".

La figure 3 est une vue en coupe axiale du dispositif de frein selon un deuxième mode d'exécution, en position "freiné".

La figure 4 représente le frein de la figure 3 en position "libre".

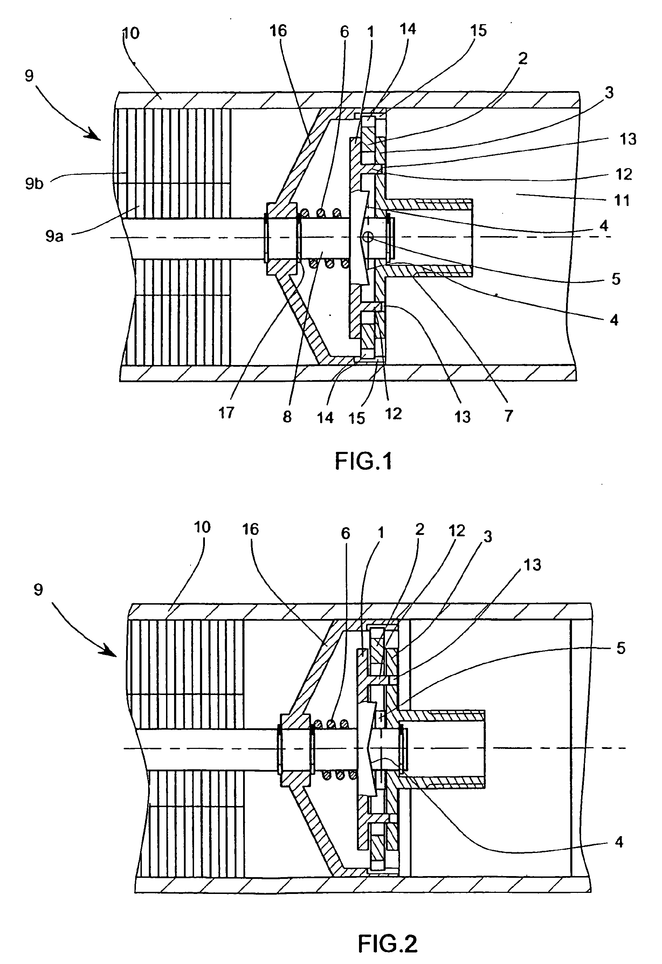

Le dispositif de frein représenté sur les figures 1 et 2 est disposé dans un carter cylindrique 10 entre un moteur électrique 9, dont on distingue le rotor 9a et le stator 9b, et un réducteur 11. Il permet d'empêcher l'ouverture ou la fermeture d'un volet roulant lorsque le moteur 9 n'est pas alimenté et de transmettre un couple mécanique d'un arbre moteur 8 à un réducteur 11 pour ouvrir ou fermer un volet roulant lorsque le moteur 9 est alimenté.

Ce dispositif de frein comprend trois disques de frein 1,2,3 juxtaposés. Deux d'entre eux 1,3 sont montés en liaison pivot sur l'arbre 8 portant le rotor 9a du moteur 9 et le dernier est en liaison glissière dans le carter 10 au moyen de saillies radiales 14 coulissant dans des rainures 15 pratiquées dans un support de palier 16 fixé au carter 10. Les disques 1 et 3 sont en liaison glissière entre eux au moyen d'axes 12 présents sur le disque 1 et coulissant dans des alésages 13 pratiqués dans le disque 3. Les trois disques sont maintenus plaqués les uns contre les autres grâce à un ressort 6 prenant appui sur un élément d'arrêt 17 et sur le disque 1. Le disque 3 est solidaire d'un arbre récepteur 7 permettant d'attaquer le réducteur 11. L'arbre 8 du moteur 9 est muni d'un perçage radial dans lequel est logée une goupille 5 faisant saillie. Le disque 1 présente une surépaisseur dans sa zone centrale dans laquelle est formée une surface en forme de double rampe 4, symétrique par rapport au plan perpendiculaire au plan du dessin et contenant l'axe de l'arbre 8, cette surface coopérant avec la goupille 5 pour décoller les disques et pour transmettre le couple de l'arbre 8 au disque 1 lorsque le moteur est alimenté.

Lorsque le moteur 9 n'est pas alimenté, comme représenté sur la figure 1, les trois disques 1,2,3 plaqués les uns contre les autres lient l'arbre récepteur 7 attaquant le réducteur 11 au carter 10. Le mouvement de rotation de cet arbre 7 se trouvant interdit, le réducteur 11 et, par conséquent, le volet se trouvent bloqués dans leur position.

Lorsque le moteur 9 est alimenté, comme représenté sur la figure 2, l'arbre 8 tourne par rapport aux disques 1,2,3 initialement immobiles. Ce mouvement de rotation de l'arbre 8 par rapport au disque 1 amène la goupille 5 en contact avec l'une des rampes 4. L'action de contact entre la goupille 5 et la rampe 4 crée un effort axial contre la poussée du ressort permettant de décoller les disques et, du fait de la pente de la rampe et du couple résistant opposé par le réducteur et le volet roulant, les disques de frein restent écartés. L'action de contact entre la goupille 5 et la rampe 4 crée, du fait de la pente de la rampe 4 et du coefficient de frottement entre la goupille 5 et la rampe 4, un effort orthoradial qui induit un couple mécanique de l'arbre 8 sur le disque 1. De cette manière, le mouvement de rotation de l'arbre 7 est libéré et la puissance mécanique est transmise de l'arbre 8 au réducteur 11 via la goupille 5, le disque 1, et le disque 3 et, par conséquent, le volet se trouve entraîné.

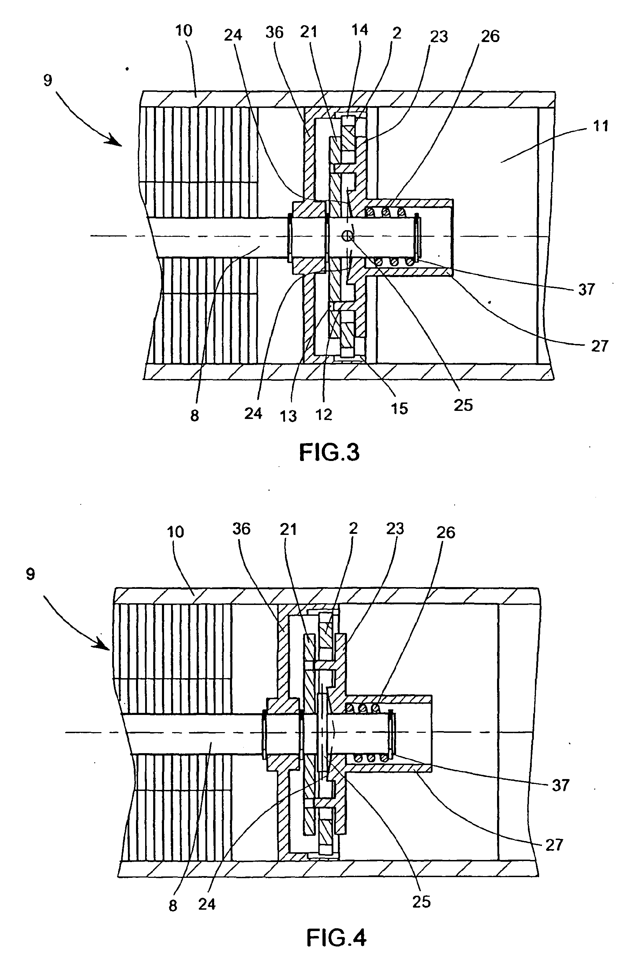

Le deuxième mode d'exécution du dispositif de frein selon l'invention représenté aux figures 3 et 4, diffère du premier mode d'exécution en ce que l'arbre récepteur 27 est solidaire du disque 23 sur lequel est réalisé la double rampe 24 coopérant avec la goupille 25 pour décoller les disques 21,2,23 et transmettre le couple mécanique à l'arbre récepteur 27 de la même manière que dans le premier mode d'exécution. Dans ce mode de réalisation la puissance mécanique est transmise de l'arbre 8 au réducteur 11 via la goupille 25, et le disque 23. L'arbre moteur 8 pénètre dans l'arbre creux 27 et le ressort 26 est logé dans l'arbre creux 27 et prend appui sur un élément d'arrêt 37 et sur le disque 23, pour appliquer les disques 21,2,23 les uns contre les autres. Il en résulte une meilleure compacité du dispositif, le support de palier 36 étant sensiblement plus court que le support de palier 16 du premier mode d'exécution.

Le dispositif de frein selon l'invention est bien entendu applicable à tout système comprenant un moteur entraînant une charge.

## Revendications

1. Dispositif de frein intercalé entre un moteur (9) comprenant un arbre moteur (8) et une charge (11), comprenant des disques de frein (1,2,3 ; 21,2,23) disposés en vis-à-vis, un moyen élastique (6 ; 26) rappelant les disques les uns contre les autres et des moyens coopérant (4,5 ; 24,25), lorsque l'arbre moteur (8) du moteur (9) est entraîné pour écarter les disques de frein (1,2,3 ; 21,2,23) contre l'action du moyen élastique (6 ; 26) et pour transmettre un couple mécanique de l'arbre moteur (8) à un arbre récepteur (7) solidaire en rotation de l'un des disques de frein en liaison pivot avec l'arbre moteur (8), l'arbre récepteur étant lié cinématiquement à la charge (11), **caractérisé en ce qu'**il comprend une juxtaposition de disques alternativement liés à l'arbre moteur (8) et à un carter (10) contenant le moteur (9) par des liaisons glissière, les disques des extrémités (1,3 ; 21,23) de la juxtaposition étant liés à l'arbre moteur(8).

2. Dispositif de frein selon la revendication 1, **caractérisé en ce que** les disques des extrémités (1,3 ; 21,23) de la juxtaposition sont liés à l'arbre moteur par des liaisons pivot.

3. Dispositif de frein selon la revendication 1 ou 2, **caractérisé en ce que** les disques liés à l'arbre moteur (8) le sont par des liaisons pivot.

4. Dispositif de frein selon la revendication 1 ou 2, **caractérisé en ce qu'**il comprend trois disques de frein (1,2,3).

5. Dispositif de frein selon l'une des revendications précédentes, **caractérisé en ce que** les disques en liaison pivot sur l'arbre moteur sont en liaison glissière entre eux.

6. Dispositif de frein selon la revendication 5, **caractérisé en ce que** l'un des disques de frein (1) en liaison pivot avec l'arbre moteur(8) présente un moyen (4) qui, combiné à un autre moyen (5) présent sur l'arbre, permet d'écarter les disques et qu'un autre des disques de frein (3) en liaison pivot avec l'arbre moteur (8) est solidaire de l'arbre récepteur (7).

7. Dispositif de frein selon l'une des revendications 1 à 5, **caractérisé en ce que** l'un des disques de frein (23) en liaison pivot avec l'arbre moteur (8) présente un moyen (24) qui, combiné à un autre moyen (25) présent sur l'arbre moteur, permet d'écarter les disques (21,2,23) et que ledit disque (23) est solidaire de l'arbre récepteur (27).

8. Dispositif de frein selon l'une des revendications 1 à 7, **caractérisé en ce que** les moyens coopérant pour écarter les disques de frein (1,2,3 ; 21,2,23) contre l'action du moyen élastique (6 ; 26) comprennent une goupille (5 ; 25) plantée dans l'arbre moteur (8) et une rampe (4 ; 24) pratiquée sur un des disques de frein en liaison pivot avec l'arbre moteur (8).

## Claims

1. Brake device, inserted between a motor (9) including a motor shaft (8) and a load (11) and comprising brake disks (1, 2, 3; 21, 2, 23) disposed face to face with each other; an elastic means (6; 26) for urging the disks against each other; and co-acting means (4, 5; 24, 25) when the shaft (8) of the motor (9) is driven, for spacing the brake disks (1, 2, 3; 21, 2, 23) against the action of the elastic means (6; 26) and for transmitting a mechanical torque from the motor shaft (8) to a receiving shaft (7) which is rotationally coupled with one of the brake disks in pivotably linked with the motor shaft (8), the receiving shaft being kinetically connected to the load (11), **characterised in that** it comprises a juxtaposition of disks alternatively connected to the motor shaft (8) and to a housing (10) containing the motor (9) through slider connections, the extremity disks (1, 3; 21, 23) of the juxtaposition being connected to the motor shaft (8).

2. Brake device according to claim 1, **characterised in that** the extremity disks (1, 3; 21, 23) of the juxtaposition are pivotably linked with the motor shaft.

3. Brake device according to claim 1 or 2, **characterised in that** the disks connected to the motor shaft (8) are pivotably linked with each other.

4. Brake device according to claim 1 or 2, **characterised in that** it comprises three brake disks (1, 2, 3).

5. Brake device according to any one of the preceding claims, **characterised in that** the disks pivotably linked with the motor shaft are in slider connection with each other.

6. Brake device according to claim 5, **characterised in that** one of the brake disks (1) that is pivotably linked with the motor shaft (8), comprises a means (4) that, co-acting with another means (5) located on the shaft, allows to separate from each other the disks, and that another one of the brake disks (3) pivotably linked with the motor shaft (8), is fastened to the receiving shaft (7).

7. Brake device according to any one of claims 1 to 5, **characterised in that** one of the brake disks (23) that is pivotably linked with the motor shaft (8), comprises a means (24) that, co-acting with another means (25) located on the shaft, allows to separate from each other the disks (21, 2, 23), and that said brake disk (23) is fastened to the receiving shaft (27).

8. Brake device according to any one of claims 1 to 7, **characterised in that** the means that co-act for separating from each other the brake disks (1, 2, 3; 21, 2, 23) against the action of the elastic means (6; 26) comprise a pin (5; 25) inserted into the motor shaft (8), and a ramp (4; 24) located on one of the brake disks pivotably linked with the motor shaft (8).

## Patentansprüche

1. Bremsvorrichtung, die zwischen einem Motor (9) mit einer Motorwelle (8) und einer Last (11) angeordnet ist, sowie frontal zueinander liegende Bremsscheiben (1, 2, 3; 21, 2, 23), und ein federndes Mittel (6; 26) aufweist, welches die Scheiben gegeneinander drückt, wobei zusammen wirkende Mittel (4, 5; 24, 25) vorgesehen sind, die bei angetriebener Motorwelle (8) des Motors (9) die Bremsscheiben (1, 2, 3; 21, 2, 23) gegen die Kraft des Federmittels (6; 26) voneinander trennt, und zur Übertragung eines mechanischen Moments von der Motorwelle (8) an eine das Moment aufnehmende Abtriebswelle (7), welche drehschlüssig mit einer der Bremsscheiben in Schwenkverbindung mit der Motorachse (8) und kinematisch mit der Last (11) verbunden ist, **dadurch gekennzeichnet, dass** sie eine Anordnung von benachbarten Scheiben aufweist, die abwechselnd an der Motorwelle (8) und an einem Gehäuse (10), welches den Motor (9) über Gleitverbindungen aufnimmt, befestigt sind, wobei die äussersten Scheiben (1, 3; 21, 23) der Anordnung benachbarter Scheiben an der Motorwelle (8) angebracht sind.

2. Bremsvorrichtung nach Anspruch 1, **dadurch gekennzeichnet, dass** die äussersten Scheiben (1, 3; 21, 23) der Anordnung benachbarter Scheiben über Drehzapfen mit der Motorwelle verbunden sind.

3. Bremsvorrichtung nach Anspruch 1 oder 2, **dadurch gekennzeichnet, dass** die mit der Motorwelle (8) verbundenen Scheiben über Drehzapfen verbunden sind.

4. Bremsvorrichtung nach Anspruch 1 oder 2, **dadurch gekennzeichnet, dass** sie drei Bremsscheiben (1, 2, 3) aufweist.

5. Bremsvorrichtung nach einem der vorstehenden Ansprüche, **dadurch gekennzeichnet, dass** die über Drehzapfen mit der Motorwelle verbundenen Scheiben über Gleitverbindungen miteinander verbunden sind.

6. Bremsvorrichtung nach Anspruch 5, **dadurch gekennzeichnet, dass** eine mit Drehzapfen mit der Motorwelle (8) verbundene Bremsscheibe (1) ein Mittel (4) aufweist, welches in Verbindung mit einem anderen Mittel (5), welches an der Welle angebracht ist, ein Auseinanderdrücken der Scheiben ermöglicht, und dass eine andere Bremsscheibe (3), die über einen Drehzapfen mit der Motorwelle (8) verbunden ist, an der Abtriebswelle (7) befestigt ist.

7. Bremsvorrichtung nach einem der Ansprüche 1 bis 5, **dadurch gekennzeichnet, dass** eine Bremsscheibe (23), die über einen Drehzapfen mit der Motorwelle (8) verbunden ist, ein Mittel (24) aufweist, das in Kombination mit einem anderen Mittel (25) an der Motorwelle ein Auseinanderdrücken der Scheiben (21, 2, 23) ermöglicht, und dass die genannte Scheibe (23) an der Abtriebswelle (27) befestigt ist.

8. Bremsvorrichtung nach einem der Ansprüche 1 bis 7, **dadurch gekennzeichnet, dass** die zusammenwirkenden Mittel, welche die Bremsscheiben (1, 2, 3; 21, 2, 23) gegen die Wirkung des Federmittels (6; 26) auseinanderdrücken, einen Stift (5; 25) aufweisen, der die Motorwelle (8) durchsetzt, und eine Rampe (4; 24), die auf einer der Bremsscheiben angebracht ist, welche über einen Drehzapfen mit der Motorwelle (8) verbunden ist.
